**Europäisches Patentamt**

(19) **European Patent Office**

**Office européen des brevets**

(11) Numéro de publication: **0 090 224**
**B1**

(12) **FASCICULE DE BREVET EUROPEEN**

(45) Date de publication du fascicule du brevet:
**29.01.86**

(51) Int. Cl.⁴: **B 23 B 27/16**

(21) Numéro de dépôt: **83102398.1**

(22) Date de dépôt: **11.03.83**

(54) **Dispositif de fixation d'une plaquette de coupe sur un porte-outil.**

(30) Priorité: **29.03.82 CH 1912/82**

(43) Date de publication de la demande:
**05.10.83 Bulletin 83/40**

(45) Mention de la délivrance du brevet:
**29.01.86 Bulletin 86/5**

(84) Etats contractants désignés:
**AT BE DE FR GB IT LU NL SE**

(56) Documents cités:
**WO - A - 81/03635**
**DE - A - 1 809 775**
**DE - A - 2 108 910**
**DE - A - 2 544 877**
**GB - A - 1 106 374**
**GB - A - 1 174 592**
**US - A - 3 488 822**

(73) Titulaire: **STELLRAM S.A., Route de l'Etraz,**
**CH-1260 Nyon, Vaud (CH)**

(72) Inventeur: **Raye, Pierre, Au Pélard 13, CH-1197 Prangins**
**Vaud (CH)**
Inventeur: **Meylan, André, Rue des Amoureux 14,**
**CH-1341 l'Orient Vaud (CH)**
Inventeur: **Gonseth, Denis R., Chemin des Rannaux,**
**CH-1297 Founex Vaud (CH)**

(74) Mandataire: **Micheli, Michel-Pierre et al, MICHELI &**
**CIE 118, Rue du Rhône Case Postale 47,**
**CH-1211 Genève 6 (CH)**

# Description

La présente invention concerne un dispositif de fixation d'une plaquette de coupe comportant un perçage traversant sur un porte-outil présentant au moins deux faces d'appui faisant un angle entre elles.

On utilise de plus en plus dans le domaine de l'usinage en général des plaquettes de coupe amovibles, plus particulièrement en métal dur fritté, fixées sur un porte-outil par différents types d'éléments de blocage tels que vis, etc. coopérant avec un trou central cylindrique ou cylindro-conique pratiqué dans la plaquette. Les manipulations requises par ces types de systèmes connus de fixation pour le changement de plaquettes présentent un certain nombre d'inconvénients. Tout d'abord, ces manipulations sont relativement longues, puisqu'il est nécessaire par exemple, de dévisser complètement la vis de fixation avant de pourvoir procéder au changement souhaité; ces manipulations sont de plus peu pratiques à effectuer, plus particulièrement dans le cas où la partie du porte-outil portant les plaquettes est d'un accès difficile avec des outils tels que tournevis, clé, levier, etc. En outre, ces outils, servant de moyens d'actionnement des éléments de fixation sont généralement de petite taille, à cause de la faible dimension de l'alésage pratiqué dans la plaquette, ce qui rend les manipulations encore plus difficiles. Enfin, ces systèmes de fixation requièrent une force de serrage qui est difficile à contrôler et à rendre constante, sans employer des moyens sophistiqués.

On connaît également un système de fixation permettant le changement rapide des plaquettes, mais qui est complexe, encombrant, coûteux, et surtout qui fait appel à une plaquette spéciale à un seul tranchant. Dans ce système, la force de serrage nécessaire au maintien de la plaquette est fournie par une pression hydraulique, pneumatique ou oléo-pneumatique.

Il est aussi connu du document DE-A-2 108 910 un dispositif de fixation d'une plaquette de coupe tel que defini dans le préambule de la revendication 1.

Dans tous les cas, il est donc nécessaire d'exercer depuis l'extérieur une pression constante pour maintenir la plaquette sur son siège, et par conséquent de supprimer cette pression pour libérer la plaquette. Ainsi, en cas de défaillance accidentelle des moyens exerçant cette pression, la plaquette de coupe est débloquée intempestivement, ce qui entraîne, lorsque cette défaillance se produit en cours d'usinage, une détérioration de l'outil et de la pièce usinée, voire des dégâts à la machine elle-même.

En conséquence, le but de cette invention consiste à fournir un dispositif de fixation d'une plaquette de coupe sur un porte-outil qui tende à obvier aux inconvénients précités des dispositifs connus. Ce but est atteint par le dispositif selon l'invention, où le porte-outil comporte un évidement dans lequel débouche un perçage pratiqué sensiblement perpendiculairement à l'une des faces d'appui; le dispositif comportant un élément de blocage disposé dans le perçage de la plaquette et celui du porte-outil et aboutissant dans ledit évidement; l'extrémité de l'élément de blocage située dans l'évidement coopérant avec l'extrémité d'un axe de commande caractérisé par le fait que cet axe est soumis en position de service à l'action de moyens élastiques, destinés à la pousser de telle sorte que la plaquette soit appliquée contre les faces d'appui par ledit élément de blocage coopérant avec ledit axe; et par le fait que l'axe de commande est muni de moyens d'actionnement situés sur une face externe du porte-outil différente de celle sur laquelle est fixée la plaquette de coupe où à l'intérieur du porte-outil, et destinés à annuler l'action des moyens élastiques pour libérer la plaquette de coupe.

Le dessin annexé illustre schématiquement et à titre d'exemple une forme d'exécution du dispositif de fixation selon l'invention.

La figure 1 est une vue partiellement en coupe longitudinale d'une forme d'exécution du dispositif en position bloquée.

La figure 2 est une vue partiellement en coupe longitudinale du dispositif en position débloquée, avec un exemple de levier de déblocage.

La figure 3 est une vue en coupe longitudinale d'une réalisation particulière d'un moyen d'actionnement pour le déblocage du dispositif.

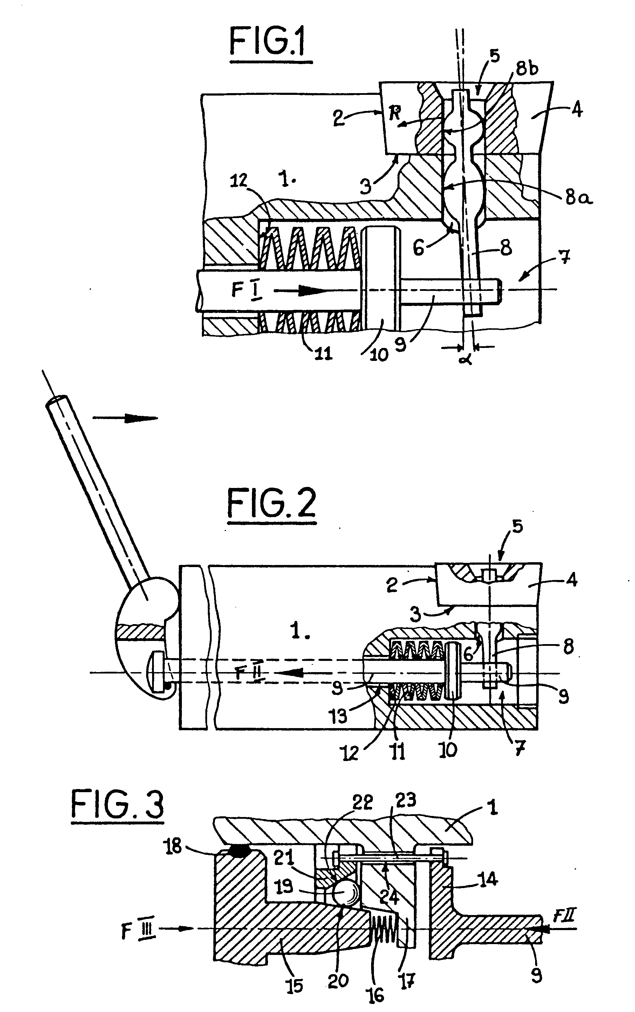

En référence aux figures 1 et 2, le dispositif de fixation illustré comporte un porte-outil 1 dont l'extrémité antérieure présente deux faces d'appui respectivement 2, 3 formant un logement destiné à recevoir une plaquette de coupe 4. Cette plaquette 4 comporte un trou cylindrique 5 dont la partie supérieure peut être conique, ce trou cylindrique 5 étant perpendiculaire à la surface de la plaquette 4 et étant sensiblement coaxial avec un perçage 6 pratiqué dans le porte-outil 1, perpendiculairement à la surface d'appui 3. Ce perçage 6 débouche dans un évidement 7 pratiqué longitudinalement dans le porte-outil 1.

Le dispositif de fixation de la plaquette 4 comporte un pion de blocage 8 disposé dans le trou cylindrique 5 et le perçage 6 superposés respectivement de la plaquette 4 et du porte-outil 1 et faisant saillie dans l'évidement 7. L'extrémité du pion de blocage 8 situés dans l'évidement 7 coopère avec un axe de commande 9, lequel comporte un disque d'arrêt 10 et étant soumis à l'action élastique d'un empilage précomprimé de rondelles-ressorts 11 (généralement en acier trempé) disposé entre le disque 10 de l'axe 9 et un paroi 12 délimitant vers l'arrière l'évidement 7.

Le pion de blocage 8 peut présenter, par exemple, la forme illustrée sur la figure 1, c'est-à-dire comportant deux renflements 8a et 8b. Le premier renflement 8a coopérant avec la paroi du perçage 6 pratiqué dans le porte-outil 1 sert de point de pivotement du pion 8, alors que le second renflement 8b coopérant avec la paroi du trou 5 de la plaquette 4 est destiné à transmettre la force de blocage à la plaquette 4 de manière à appliques celle-ci contre les faces d'appui 2 et 3. La force de blocage est donnée par une résultante R provenant de l'action élastique de l'empilage précomprimé des rondelles-ressorts 11 qui exercent une force FI sur l'axe de commande 9; celui-ci tend donc à pousser l'extrémité inférieure du pion de blocage 8 vers l'avant, de telle sorte que celui-ci pivote d'un angle α jusqu'au blocage de la plaquette. La valeur de cet angle α dépend du jeu

entre le diamètre du trou 5 et du perçage 6 et celui des renflements 8a, 8b, ainsi que du déport d'axe éventuel entre le trou 5 de la plaquette 4 et le perçage 6 pratiqué dans le porte-outil 1.

Un avantage déterminant du dispositif de fixation selon l'invention réside donc dans le fait que l'effet de blocage donné par l'action des moyens élastiques, ici l'empilage de rondelles-ressorts comprimé au moment de l'assemblage du dispositif, est permanent de sorte que la plaquette est constamment appliquée, en position de service du système, contre ses faces d'appui.

Bien entendu, toute autre forme appropriée du pion de blocage est utilisable pour appliquer la plaquette de coupe contre les faces d'appui du porte-outils sous l'action des moyens élastiques agissant sur le pion par l'entremise de l'axe de commande avec lequel il coopère.

De même, les moyens élastiques utilisés peuvent être autres que des rondelles-ressorts comprimées pour autant qu'ils exercent une force FI permanente en position de service du système.

Pour l'enlèvement de la plaquette de coupe 4 en vue d'un nouvel indexage ou de son remplacement par une nouvelle plaquette, il suffit, comme illustré sur la figure 2, d'exercer une force FII en tirant l'axe de commande 9 vers l'arrière, de manière à annuler la force résultante R provenant de la compression des rondelles-ressorts 11. Ainsi, le pion de blocage 8 est mis dans une position coaxiale avec le trou 5 de la plaquette 4 et le perçage 6 du porte-outil 1, et de la plaquette 4 est alors libérée. Une fois la plaquette indexée ou remplacée par une nouvelle plaquette, il suffit de relâcher l'effort FII exercé sur l'axe de commande 9, ce qui rétablit alors la force résultante R provoquée par la force FI due à l'action élastique des rondelles-ressorts 11.

Ainsi, un autre avantage important de la présente invention consiste en ce que l'axe de commande peut être actionné par des moyens d'actionnement faciles à manipuler et situés dans une zone du porte-outil d'accès facile, de préférence dans une zone éloignée de la zone où est fixée la plaquette de coupe. La caractéristique principale de ces moyens d'actionnement est qu'ils sont destinés à libérer la plaquette et non de la bloquer, ce qui élimine tout risque de déblocage intempestif en cas de défaillance de ces moyens.

Comme moyens d'actionnement de l'axe de commande destinés à libérer la plaquette, on peut utiliser tout système mécanique, pneumatique, hydraulique ou électrique susceptible de tirer vers l'arrière ledit axe. De préférence, l'évidement 7 pratiqué dans le porte-outil 1 se prolonge vers l'arrière par un canal 13 dans lequel coulisse l'axe de commande 9. L'extrémité arrière de celui-ci (comme montré à la figure 2) peut déboucher à l'arrière du porte-outil, c'est-à-dire dans une zone opposée à la zone de coupe. Plus particulièrement, on peut utiliser, par exemple, un levier ou une clé coopérant avec l'extrémité arrière, un électro-aimant, etc.

On peut également utiliser un piston à air comprimé, un piston hydraulique ou un multiplicateur oléo-pneumatique. Dans ces cas, l'extrémité arrière de l'axe de commande 9 est donc muni d'un piston, et une aménée d'air ou d'huile sous pression est pratiquée latéralement dans le porte-outil.

Lorsqu'il n'est pas possible de prévoir une telle amenée d'air ou de fluide latéralement dans le porte-outil, il est possible de prévoir un dispositif particulier, comme par exemple celui illustré à la figure 3, permettant d'assurer l'inversion du sens d'action sur les moyens d'actionnement, tout en gardant la même direction sur le même axe de déplacement de l'axe de commande.

Dans le dispositif d'invention montré à titre d'exemple sur la figure 3, l'extrémité arrière de l'axe de commande 9 est munie d'une collerette 14. De plus, un piston d'actionnement 15 est monté coulissant à l'extrémité arrière du porte-outil 1, ce piston 15 présentant une tête conique et étant soumis à l'action d'un ressort de rappel 16 coopérant d'une part avec l'extrémité de la tête conique du piston 15 et d'autre part avec une paroi transversale 17 du porte-outil 1.

Un joint 18 assure l'étanchéité du piston 15 dans le porte-outil 1. Une série de billes 19 sont montées autour de la paroi conique 20 de la tête du piston 15, et maintenues en position par une bague 21 présentant une paroi inclinée 22 en contact avec lesdites billes 19. Enfin, des tiges de liaison 23, montées coulissantes dans des passages 24 pratiqués dans la paroi transversale 17 du porte-outil 1, relient la bague 21 à la collerette 14.

Pour provoquer le déplacement selon la flèche II vers l'arrière de l'axe de commande 9, afin d'annuler la force de blocage résultante R due aux rondelles-ressorts et libérer la plaquette de coupe, il convient dans le dispositif décrit ci-dessus d'exercer une force FIII sur le piston d'actionnement 15 dirigée vers l'avant du porte-outil. Ce déplacement du piston 15 provoque le déplacement radial des billes 19 poussées par la rampe constituée par la paroi conique 20, et par là le déplacement correspondant vers l'arrière de la bague 21 poussée par les billes 19 coopérant avec la rampe formée par la paroi inclinée 22 de cette bague 21. Le mouvement vers l'arrière de la bague 21 est alors transmis à la collerette 14 et par conséquent à l'axe de commande 9 par l'intermédiaire de tiges de liaison 23.

La manipulation ou l'intervention sur les moyens d'actionnement peut se faire sur l'outil, à proximité de celui-ci ou même à distance, et peut être dans le cas de tour automatique ou CN, intégré dans le programme du cycle de fabrication.

Dans tous les cas, les moyens d'actionnement de l'axe de commande sont d'un accès facile et d'une dimension telle que leur manipulation soit aisée, ce qui n'est pas le cas avec les dispositifs de fixation connus. Le dispositif de fixation selon l'invention s'applique à toutes plaquettes de coupe amovibles, avec ou sans dépouille et à trou cylindrique ou cylindro-conique.

## Revendications

1. Dispositif de fixation d'une plaquette de coupe (4) comportant un trou (5) traversant sur un porte-outil (1) présentant au moins deux faces d'appui (2, 3) faisant un angle entre elles, le porte-outil (1) ayant un évidement (7) dans lequel débouche un perçage (6) pratiqué sensiblement perpendiculairement à l'une des faces d'appui (3); le dispositif comportant un élément de blocage (8) disposé dans le trou (5) de la plaquette (4) et le perçage (6) du porte-outil aboutissant dans ledit évidement (7); l'extrémité de l'élément de blocage située dans l'évidement coopérant avec l'extrémité d'un axe de commande (9) caractérisé par le fait que cet axe (9) est soumis, en position de service, à l'action de moyens élastiques (11), destinés à le pousser de telle sorte que la plaquette soit appliquée contre les faces d'appui (2, 3) par ledit élément de blocage (8) coopérant avec ledit axe (9); et par le fait que l'axe de commande (9) est muni de moyens d'actionnement situés sur une face externe du porte-outil (1) différente de celle sur laquelle est fixée la plaquette de coupe (4) où à l'intérieur du porte-outil (1), et destinés à annuler l'action des moyens élastiques (11) pour libérer la plaquette de coupe (4).

2. Dispositif de fixation selon le revendication 1, caractérisé par le fait que les moyens élastiques sont constitués par un empilage de rondelles-ressorts (11) monté sur l'axe de commande (9) et comprimé entre une paroi de l'évidement (12) et un disque d'arrêt (10) que comporte ledit axe.

3. Dispositif de fixation selon l'une des revendications 1 à 2, caractérisé par le fait que l'élément de blocage est une tige (8) présentant au moins une portion (8a) destinée à être en position bloquée en contact avec la paroi du perçage (6) pratiqué dans le porte-outil (1) et au moins une portion (8b) destinée à être en position bloquée en contact avec la paroi du trou (5) que comporte la plaquette de coupe (4), et par le fait que l'inclinaison de la tige (8) en position bloquée par rapport à l'axe central du trou de la plaquette (5) et du perçage du porte-outil (6) est déterminée par le jeu entre le diamètre maximum de la tige (8) et le diamètre desdits perçages (5, 6), ainsi que du déport d'axe éventuel entre le trou (5) de la plaquette (4) et le perçage (6) du porte-outil (1).

4. Dispositif de fixation selon l'une des revendications 1 à 3, caractérisé par le fait que les moyens d'actionnement sont des moyens mécaniques coopérant avec l'extrémité arrière de l'axe de commande (9).

5. Dispositif de fixation selon la revendication 4, caractérisé par le fait que lesdites moyens consistent en une clé ou un levier .

6. Dispositif de fixation selon l'une des revendications 1 à 3, caractérisé par le fait que les moyens d'actionnement comprennent un électro-aimant agissant sur l'axe de commande.

7. Dispositif de fixation selon la revendication 1, caractérisé par le fait que l'extrémité arrière de l'axe de commande (9) est munie d'un piston (14).

8. Dispositif de fixation selon la revendication 7, caractérisé par le fait que le porte-outil comporte une amenée de fluide latérale, destinée à l'actionnement pneumatique ou hydraulique dudit piston.

9. Dispositif de fixation selon la revendication 7, caractérisé par le fait qu'il comporte un second piston (15) monté coulissant à l'arrière du porte-outil et accessible depuis l'extérieur de celui-ci, ce piston présentant une tête conique (20), et une ou plusieurs billes (19) disposées autour de la tête conique du piston et maintenues par une bague (21), cette bague présentant une paroi inclinée (22) en contact avec lesdites billes et étant reliée par des tiges de liaison (23) au piston dont est munie l'extrémité arrière de l'axe de commande.

**Patentansprüche**

1. Vorrichtung zum Befestigen eines mit einem Durchtrittsloch versehenen Schneidplättchens an einem Werkzeughalter (1), der wenigstens zwei einen Winkel miteinander einschliessende Anlageflächen (2, 3) aufweist, wobei der Werkzeughalter (1) eine Ausnehmung (7) aufweist, in die eine Bohrung (6) mündet, die im wesentlichen senkrecht zu einer (3) der Anlageflächen ausgebildet ist, wobei die Vorrichtung ein Blockierelement (8) aufweist, das im Loch (5) des Plättchens (4) und in der an die Ausnehmung angrenzenden Bohrung (6) des Werkzeughalters angeordnet ist, wobei das in der Ausnehmung befindliche Ende des Blockierelements mit dem Ende einer Antriebsachse (9) zusammenarbeitet, dadurch gekennzeichnet, dass die Achse (9) in der Arbeitsstellung der Wirkung von elastischen Mitteln (11) ausgesetzt ist, die dazu dienen, derart auf die Achse zu drücken, dass das Plättchen durch das mit der Achse (9) zusammenwirkende Blockierelement (8) auf die Anlageflächen (2, 3) gedrückt wird, und dass die Antriebsachse (9) mit Betätigungsmitteln versehen ist, die sich auf einer Aussenseite des Werkzeughalters (17 befinden, die sich von derjenigen unterscheidet, auf der das Schneidplättchen (4) befestigt ist, oder die sich innerhalb des Werkzeughalters (1) befinden und dazu dienen, die Wirkung der elastischen Mittel aufzunehmen, um das Schneidplättchen (4) freizugeben.

2. Befestigungsvorrichtung nach Anspruch 1, dadurch gekennzeichnet, dass die elastischen Mittel durch einen Stapel von Scheibenfedern (10) gebildet sind, die auf der Antriebsachse (9) montiert und zwischen einer Wand der Ausnehmung (12) und einer von der Achse enthaltenen Haltescheibe (10) zusammengedrückt sind.

3. Befestigungsvorrichtung nach einem der Ansprüche 1 bis 2, dadurch gekennzeichnet, dass das Blockierelement eine Stange (8) ist, die mindestens einen Abschnitt (8a) aufweist, der in der Blockierstellung mit der Wand der im Werkzeughalter (1) ausgebildeten Bohrung (6) in Berührung steht, und mindestens einen Abschnitt (8b) aufweist, der in der Blockierstellung mit der Wand des im Schneidplättchen (4) ausgebildeten Durchtrittslochs (5) in Berührung steht, und dass die Neigung der Stange (8) in der Blockierstellung bezüglich der Mittelachse des Lochs des Plättchens (5) und der Bohrung des Werkzeughalters (6) durch das Spiel zwischen dem grössten Durchmesser der Stange (8) und dem Durchmesser der Bohrungen (5, 6) sowie die eventuelle Achsversetzung zwischen dem Durchtrittsloch des Plättchens (4) und der Bohrung (6) des Werkzeughalters (1) bestimmt ist.

4. Befestigungsvorrichtung nach einem der Ansprüche 1 bis 3, dadurch gekennzeichnet, dass die Betätigungsmittel mechanische Mittel sind, die mit dem hinteren Ende der Antriebsachse (9) zusammenwirken.

5. Befestigungsvorrichtung nach Anspruch 4, dadurch gekennzeichnet, dass diese Mittel aus einem Schlüssel oder einem Hebel bestehen.

6. Befestigungsvorrichtung nach einem der Ansprüche 1 bis 3, dadurch gekennzeichnet, dass die Betätigungsmittel einen Elektromagnet aufweisen, der auf die Antriebsachse einwirkt.

7. Befestigungsvorrichtung nach Anspruch 1, dadurch gekennzeichnet, dass das hintere Ende der Antriebsachse (9) mit einem Kolben (14) versehen ist.

8. Befestigungsvorrichtung nach Anspruch 7, dadurch gekennzeichnet, dass der Werkzeughalter eine seitliche Fluidzuleitung zur pneumatischen oder hydraulischen Betätigung des Kolbens aufweist.

9. Befestigungsvorrichtung nach Anspruch 7, dadurch gekennzeichnet, dass die aufweist: einen zweiten Kolben (15), der am hinteren Ende des Werkzeughalters verschiebbar montiert und von dessen Aussenseite her zugänglich ist, wobei der Kolben einen konischen Kopf (20) aufweist, und eine oder mehrere Kugeln (19), die um den Kopf herum angeordnet und durch einen Ring (21) gehalten sind, wobei der Ring eine geneigte Wand (22) aufweist, die in Berührung mit den Kugeln steht und durch Verbindungsstangen (23) mit dem Kolben verbunden ist, mit dem das hintere Ende der Antriebsachse versehen ist.

## Claims

1. Fixing device of a cutting insert (4) with a traversing boring (5) on a tool-holder (1) having at least two bearing faces (2, 3) making an angle between them, the tool holder (1) having a hollow (7) into which a boring (6) emerges which is provided sensibly perpendicularly to one of the bearing faces (3), the device comprising a blocking element (8) disposed in the boring (5) of the insert (4) and in the boring (6) of the tool-holder projecting into said hollow (7), the end of the blocking element situated in the hollow cooperating with the end of a control shaft (9), characterized by the fact that this shaft (9) is submitted, in service position, to the action of resilient means (11) intended to push it so as the insert is applied against the bearing faces (2, 3) by said blocking element (8) cooperating with said shaft (9), and by the fact that the control shaft (9) is provided with driving means situated on an external face of the tool-holder (1) which is different from that on which the cutting insert (4) is fixed or on the inside of the tool-holder (1), and which are intended to cancel the action of the resilient means (11) for releasing the cutting insert (4).

2. Fixing device according to claim 1, characterized by the fact that the resilient means are constituted by a stack of spring washers (11) mounted on the control shaft (9) and compressed between a wall of the hollow (12) and a stopping disk (10) with which said shaft is provided.

3. Fixing device according to claim 1 or to claim 2, characterized by the fact that the blocking element is a pin (8) having at least a portion (8a) intended to be in blocked position in contact with the wall of the boring (6) provided in the tool-holder (1) and at least a portion (8b) intended to be in said blocked position in contact with the wall of the boring (5) of the cutting insert (4), and by the fact that the inclination of the pin (8) in blocked position with regards to the central axis of the boring of the insert (5) and of the boring (6) of the tool-holder is determined by the looseness between the maximum diameter of the pin (8) and the diameter of said borings (5, 6), as well as by the eventual axis shifting between the boring (5) of the insert (4) and the boring (6) of the tool-holder (1).

4. Fixing device according to one of claims 1 to 3, characterized by the fact that the driving means are mechanical means cooperating with the rear end of the control shaft (9).

5. Fixing device according to claim 4, characterized by the fact that said means are constituted by a wrench or a lever.

6. Fixing device according to one of claims 1 to 3, characterized by the fact that the driving means comprise an electromagnet acting onto the control shaft.

7. Fixing device according to claim 1, characterized by the fact the rear end of the control shaft (9) is provided with a piston (14).

8. Fixing device according to claim 7, characterized by the fact the tool-holder comprises a lateral fluid inlet, adapted to the pneumatic or hydraulic operating of said piston.

9. Fixing device according to claim 7, characterized by the fact that it comprises a second piston (15) slidably mounted at the rear part of the tool-holder and being accessible from the outside thereof, said piston presenting a conical head (20), and one or severall balls (19) being disposed around the conical head of the piston and maintained by a ring (21), said ring having an inclined wall (22) in contact with said balls and being bound through linking rods (23) to the piston with which the rear end of the control shaft is provided.

0 090 224

FIG.1

FIG.2

FIG.3

7